# EUROPEAN PATENT APPLICATION

(11) **EP 4 477 060 A1**
(43) Date of publication of application: **18.12.2024**
(21) Application number: 24179367.8
(22) Date of filing: 31.05.2024
(51) Int. Cl.: A01G 3/06, A01D 34/84, A01D 34/90, A01G 3/08, A01G 20/47

(54) **DEVICE FOR EXECUTING MAINTENANCE OPERATIONS IN A LAND OR GARDEN**

(30) Priority: 15.06.2023 IT 202300012315
(71) Applicant: Stiga S.p.A., 31033 Castelfranco Veneto (TV) (IT)
(72) Inventor: RIGONI, Mattia, 31015 Conegliano (TV) (IT); CAMERON, James, 31030 Casier (TV) (IT); TOLOTTO, Daniele, 31040 Chiarano (TV) (IT); MARTONE, Dario, 35138 Padova (PD) (IT); D'AGOSTINI, Mauro, 35018 San Martino di Lupari (PD) (IT); ZANOLIN, Alessandro, 35010 Trebaseleghe (PD) (IT); ZONTA, Paolo, 31033 Castelfranco Veneto (TV) (IT); CALLEGARO, Antonio, 31100 Treviso (IT)
(74) Representative: PGA S.p.A.

(57) **Abstract**

A device adapted to execute land maintenance operations comprising a work tool, a motor configured for moving said work tool, a handle comprising a gripping portion configured to be grasped by an operator, at least one drive control configured for activating the motor, wherein said drive control comprises a fulcrum defining a drive axis and a drive tab 52 movable about said drive axis and configured to be driven by an operator. The drive tab extends in length away from the drive axis, and in width between a first side edge and a second side edge, and wherein said drive tab comprises a contact surface, configured to contact a hand of the operator, extending in width to define a respective curved profile having concavity facing said gripping portion of the handle.

## Description

### FIELD OF THE INVENTION

The present invention relates to a device for executing gardening operations, such as maintenance of lands or gardens, including pruning operations of plants, shrubs and hedges, or for mowing grass. The device can be used as a brush cutter, turf trimmer, hedge trimmer, chainsaw or as a blower.

Lastly, the present invention relates to process for manufacturing a device for executing maintenance operations on lands or gardens.

### STATE OF THE ART

Devices for executing maintenance operations, for example cutting operations such as pruning hedges and plants or mowing grass, are known in the field of gardening and land maintenance.

Such devices commonly comprise a knob which the operator grasps to handle the cutting device, e.g., to orient the device in the desired direction to execute the maintenance operations.

The knob of the device is commonly constrained to the body of the device itself by means of coupling solutions comprising screws and bolts.

However, the Applicant has noted that such coupling solutions between the body of the device and the knob can present various problems.

Firstly, the threaded couplings determine a concentration, and thus an intensification, of the stresses on the knob and on the body of the device carrying the knob, consequently generating an increased risk of breakage at the coupling zone with the knob. Furthermore, the coupling by means of screws and/or bolts limits the assembly speed of the device during the manufacturing steps.

The devices used to execute maintenance operations comprise various components, including a work tool, a motor connected to the cutting tool, and a battery for the power supply of the motor. The combination of such components results in a mass of the device which is not indifferent, especially for a user who must manoeuvre the device for several hours a day. The mass of the cutting device is thus an extremely important parameter to consider. The Applicant points out that another significant parameter, in order to reduce the fatigue of the operator, is the arrangement of the masses along the extension in length of the device.

The devices used to execute maintenance operations also comprise at least one drive control adapted to determine or allow the activation of the electric motor connected to the work tool: the operator must therefore grasp the gripping portion of the knob of the device and simultaneously drive the drive control to execute the maintenance operations. The Applicant points out that an operator, for example a gardener, needs to move the device according to different angles so as to execute the desired cutting operations. For example, during hedge trimming operations, the operator needs to move the device to cut both the vertical face of the hedge and the top portion of the hedge. However, the activation of the drive control by the user during the movement of the device itself can be difficult or hardly facilitated. The state of the art comprises cutting devices for the maintenance of gardens comprising a portion of the machine body, carrying the drive control, which is rotatable with respect to the cutting tool, so as to facilitate the operator in driving the drive control.

### OBJECTS OF THE INVENTION

A first object is to provide a device for the maintenance of gardens and/or lands having a knob which is robust and reliable over time.

A further object is to provide a cutting device for the maintenance of gardens and/or lands having a knob which is convenient and easy for a user to grasp.

A further object is to speed up the coupling operations between the knob and the body of the device, for example during the manufacturing steps of the cutting device itself.

A further object is to provide a cutting device for the maintenance of gardens and/or lands having reduced manufacturing costs.

A further object is to provide a device for the maintenance of gardens and/or lands capable of reducing the problems related to the corrosion of the components, including the corrosion of screws and/or bolts of the cutting device.

A further object is to provide a device for the maintenance of gardens and/or lands which is easy and agile for an operator to manage.

A further object is to provide a device for the maintenance of gardens and/or lands capable of limiting the fatigue of the operator.

A further object is to provide a device for the maintenance of gardens and/or lands capable of reducing the likelihood that the operator will incur physical problems as a result of the use, especially prolonged in time, of the device.

A further object is to provide a device for the maintenance of gardens and/or lands having a drive control which can be easily driven by the operator during the movement of the device itself.

A further object is to provide a device for the maintenance of gardens and/or lands having a drive control which allows the operator to maintain a comfortable position during the maintenance operations, so as to reduce operator fatigue.

A further object is to provide a device for the maintenance of gardens and/or lands having a drive control which allows an ergonomic grip by the operator during the movement of the device.

These and other objects, which will appear more clearly from the following description, are substantially achieved by a device in accordance with one or more of the appended claims and/or the following aspects.

### SUMMARY

Particular aspects of the present invention are listed below, which aspects can be non-optional or optional aspects of the present invention. Each of the following aspects of the present invention can therefore form an appropriate basis for any amendments to the appended claims. It should be noted that the provision of dependent aspects cannot in any way be traced back to a presumption of limited validity of the independent claims, which, on the contrary, are believed to be all new and inventive in light of the state of the art.

A 1st aspect is related to a device (1) adapted to execute maintenance operations in a land or garden, said device (1) being optionally suitable for use as a brush cutter or as a turf trimmer or as a hedge trimmer or as a chainsaw or as a blower,
said device (1) comprising:
   - at least one work tool (2) configured to execute said maintenance operations;
   - at least one motor (5) operatively connected to said work tool (2) and configured to move said work tool (2) to execute said maintenance operations;
   - a knob (10) comprising:
      ∘ at least one gripping portion (11), configured to be grasped by an operator during said maintenance operations, and
      ∘ at least one constraining portion (12);
   - a central body (30) carrying said knob (10) and comprising at least a first cap (31) and a second cap (32) facing and constrained to each other in an assembled condition of said central body (30),
      in said assembled condition said first cap (31) and said second cap (32) defining in combination a respective constraining portion (33) of the central body (30) constrained to the constraining portion (12) of said knob (10), and in which the constraining portion (33) of the central body (30) is at least partially counter-shaped to the constraining portion (12) of said knob (10) to define an undercut coupling system (34) constraining said knob (10) to said central body (30).

A 2nd aspect is related to a device (1) adapted to execute maintenance operations on a land or garden, said device (1) being optionally suitable for use as a brush cutter and/or as a turf trimmer and/or as a hedge trimmer and/or as a chainsaw,
said device (1) comprising:
   - at least one work tool (2) configured to execute said maintenance operations;
   - at least one motor (5) operatively connected to said work tool (2) and configured to move said work tool (2) to execute said maintenance operations;
   - a knob (10) comprising:
      ∘ at least one gripping portion (11), configured to be grasped by an operator during said maintenance operations, and
      ∘ at least one constraining portion (12);
   - a central body (30) carrying said knob (10) and comprising a respective constraining portion (33) constrained or configured to be constrained to the constraining portion (12) of said knob (10),
and in which the constraining portion (33) of the central body (30) is at least partially counter-shaped to the constraining portion (12) of said knob (10) to define an undercut coupling system (34) constraining said knob (10) to said central body (30).

In a 3rd aspect according to the preceding aspect 2, the central body (30) comprises at least a first cap (31) and a second cap (32) facing and constrained to each other in an assembled condition of said central body (30), in which, in said assembled condition, said first shell (31) and said second shell (32) define in combination the constraining portion (33) of the central body (30).

A 4th aspect is related to a device (1) adapted to execute maintenance operations in a land or garden, said device (1) being optionally suitable for use as a brush cutter or as a turf trimmer or as a hedge trimmer or as a chainsaw or as a blower,
said device (1) comprising:
   - at least one work tool (2) configured to execute said maintenance operations;
   - at least one electric motor (5) operatively connected to said work tool (2) and configured to move said work tool (2) to execute said maintenance operations;
   - a battery housing (40) configured to accommodate at least one battery (41) for the power supply of said motor (5);
   - at least one knob (10, 20) comprising at least one respective gripping portion (11) configured to be grasped by an operator during said maintenance operations;

   said device extending in length along a main extension direction (MD),
   and in which said at least one knob (10, 20) is interposed, according to said main direction (MD), between said motor (5) and said battery housing (40).

A 5th aspect is related to a device (1) adapted to execute maintenance operations in a land or garden, said device (1) being optionally suitable for use as a brush cutter or as a turf trimmer or as a hedge trimmer or as a chainsaw or as a blower,
said device (1) comprising:
   - at least one work tool (2) configured to execute said maintenance operations;
   - at least one motor (5) operatively connected to said work tool (2) and configured to move said work tool (2) to execute said maintenance operations;
   - a handle (20) comprising a gripping portion configured to be grasped by an operator to manoeuvre said device during the garden maintenance operations,
   - at least one drive control (50) configured to activate or allow the activation of said motor (5) of the work tool (2),
      said drive control (50) comprising a fulcrum (51) defining a drive axis (AA) and a drive tab (52) movable about said drive axis (AA) and configured to be driven by an operator,
      in which said drive tab (52) extends:
         - in length (L) away from the drive axis (AA), and
         - in width (W), orthogonal to said extension in length (L), between a first side edge (52a) and a second side edge (52b),
and in which said drive tab (52) comprises a contact surface (53), configured to contact a hand of the operator, extending in width to define a respective curved profile having concavity facing towards said gripping portion (21) of the handle (20).

A 5th-bis aspect is related to a manufacturing process of a device (1) adapted to execute maintenance operations in a land or garden, said device (1) being optionally suitable for use as a brush cutter or as a turf trimmer or as a hedge trimmer or as a chainsaw or as a blower,
said manufacturing process comprising at least the following steps:
   - arranging at least one work tool (2) configured to execute said maintenance operations;
   - arranging at least one motor (5) operatively connected to said work tool (2) and configured to move said work tool (2) to execute said maintenance operations;
   - arranging a knob (10) comprising:
      ∘ at least one gripping portion (11), configured to be grasped by an operator during said maintenance operations, and
      ∘ at least one constraining portion (12);
   - arranging at least a first cap (31) and a second cap (32) of a central body (30) of the device (1), each of said first cap (31) and said second cap (32) comprising a respective part (33a, 33b) of a constraining portion (33) of the central body (30);
   - in a disassembled condition in which the first cap (31) and the second cap (32) are separated from each other, interposing the constraining portion (12) of the knob (10) between the first cap (31) and the second cap (32);
   - approaching and constraining the first cap (31) to the second cap (32) maintaining the constraining portion (12) of the knob (10) interposed between the respective parts (33a, 33b) of the constraining portion (33) of the first cap (31) and of the second cap (32);
      said step of approaching and constraining the first cap (31) to the second cap (32) defining an assembled condition of the central body (30),
the constraining portion (33) of the central body (30) being at least partially counter-shaped to the constraining portion (12) of said knob (10) to define, in said assembled condition of the central body (30), an undercut coupling system (34) between the constraining portion (12) of said knob (10) and the constraining portion (33) of said central body (30).

In a 5th-ter aspect according to the preceding aspect 5bis, said device (1) is in accordance with any one of the preceding aspects 1-5 and with any one of the following aspects.

In a 6th aspect according to any one of the preceding aspects, the coupling system (34) between said central body (30) and said knob (10) does not comprise threaded fixing elements, optionally said coupling system between said central body (30) and said knob (10) not comprising fixing screws or nuts or bolts.

In a 7th aspect according to any one of the preceding aspects, the first cap (31) and the second cap (32) each comprise a respective part (33a, 33b) of said constraining portion (33) of the central body (30).

In an 8th aspect according to the preceding aspect, the part (33a) of the constraining portion (33) of the first cap (31) is symmetrical, optionally substantially equal, to the part (33b) of the constraining portion (33) of the second cap (32). In a 9th aspect according to any one of the two preceding aspects, the part (33a) of the constraining portion (33) of the first cap (31) and the part (33b) of the constraining portion (33) of the second cap (32) each have an "L" or "T" shape. In a 10th aspect according to any one of the preceding aspects, the constraining portion (12) of the knob (10) has an "L" or "T" shape, optionally in which a section of the constraining portion (12) of the knob (10) has an "L" or "T" shape. In an 11th aspect according to any one of the preceding aspects, the constraining portion (33) of the central body (30) has an "L" or a "T" shape, optionally in which a section of the constraining portion (33) of the central body (30) has an "L" or a "T" shape.

In a 12th aspect according to any one of the preceding aspects, in the assembled condition, the constraining portion (12) of the knob (10) is inserted inside the constraining portion (33) of the central body (30).

In a 13th aspect according to any one of the preceding aspects, the constraining portion (33) of the central body (30) wraps and locks the constraining portion (12) of said knob (10), optionally in each direction.

In a 14th aspect according to any one of the preceding aspects, in said assembled condition the constraining portion (12) of said knob (10) is fixed in position to said constraining portion (33) of the central body (30).

In a 15th aspect according to any one of the preceding aspects, the constraining portion (33) of the central body (30) is defined only in the assembled condition of the central body (30).

In a 16th aspect according to any one of the preceding aspects, the undercut coupling system (34) constraining said knob (10) to said central body (30) is defined only in the assembled condition of the central body (30).

In a 17th aspect according to any one of the preceding aspects, in the assembled condition the knob (10) is irremovable from said central body (30).

In an 18th aspect according to any one of the preceding aspects, in a disassembled condition in which the first cap (31) is separated from the second cap (32), said knob (10) is separable from said central body (30).

In a 19th aspect according to the preceding aspect, said knob (10) is separable from said central body (30) only in said disassembled condition of the central body (30).

In a 20th aspect according to any one of the two preceding aspects, in said disassembled condition, the device is not adapted to execute said maintenance operations.

In a 21st aspect according to any one of the preceding aspects, the knob (10) comprises a peripheral profile (13) carrying the gripping portion (11) and the constraining portion (12) of the knob (10).

In a 22nd aspect according to the preceding aspect, the constraining portion (12) of the knob (10) protrudes transversely with respect to said peripheral profile (13).

In a 23rd aspect according to any one of the two preceding aspects, said peripheral profile (13) is closed or semi-closed, optionally in a closed ring, to define an internal opening (14) of the knob (10) inside said closed peripheral profile.

In a 24th aspect according to the preceding aspect, the constraining portion (12) of the knob (10) protrudes towards said internal opening (14) of the knob (10).

In a 25th aspect according to any one of the two preceding aspects, the central body (30) passes through the internal opening (14) of the knob (10).

In a 26th aspect according to any one of the preceding aspects from 21, said constraining portion (12) of the knob (10) comprises at least a first portion (15) and a second portion (16), in which:
- the first portion (15) is interposed between the peripheral profile (13) of the knob (10) and the second portion (16);
- the second portion (16) emerges from the first portion (15) transversely, optionally orthogonally, to the first portion (15).

In a 27th aspect according to any one of the preceding aspects, the constraining portion (12) of the knob (10) is made of plastic material or composite material.

In a 28th aspect according to any one of the preceding aspects, the constraining portion (33) of the central body (30) is made of plastic material or composite material.

In a 29th aspect according to any one of the preceding aspects, the first cap (31) and the second cap (32) of the central body (30) are constrainable and releasable from each other, to respectively define the assembled condition and the/a disassembled condition of the central body (30), by means of a constraining system comprising at least one among an interlocking system and one or more threaded elements, for example one or more screws.

In a 30th aspect according to any one of the preceding aspects, the device extends in length along a main direction (MD).

In a 31st aspect according to the preceding aspect, the first cap (31) and the second cap (32) of the central body (30) face each other, optionally contact each other, in the assembled condition along a constraining plane substantially parallel to said main direction (MD) of the device.

In a 32nd aspect according to any one of the preceding aspects, the device extends in length along a/the main direction (MD), and in which said knob (10) extends transversely to said main direction (MD) away from the central body (30). In a 33rd aspect according to any one of the preceding aspects, said knob (10) has a closed or semi-closed ring shape and defines a medial lying plane (MP) transverse to said main direction (MD) of extension in length of the device.

In a 34th aspect according to the preceding aspect, said medial lying plane (MP) intersects the gripping portion (11) of the knob and the constraining portion (12) of the knob (10) and optionally the internal opening (14).

In a 35th aspect according to any one of the two preceding aspects, the medial lying plane (MP) of the knob (10) intersects the undercut coupling system (34).

In a 36th aspect according to any one of the preceding aspects, the device comprises a handle (20) extending substantially along the main direction (MD) of extension in length of the device, said handle (20) comprising a respective gripping portion (21) configured to be grasped by a second hand of the operator during said garden maintenance operations, said knob (10) being configured to be grasped by a first hand of the operator, said gripping portion (21) of the handle (20) being distinct and separate from the gripping portion (11) of the knob (10).

In a 36th aspect according to any one of the preceding aspects, the handle (20) extends along a substantially straight extension direction, and in which the knob (10) lies on a respective medial lying plane (MP) transverse to said extension direction of the handle (20).

In a 37th aspect according to any one of the preceding aspects, said knob (10) is interposed between said work tool (2) and said handle (20) with respect to a main direction MD of extension in length of the device.

In a 38th aspect according to any one of the preceding aspects, said device comprises at least one battery housing (40) configured to accommodate a battery (41) for the power supply of the motor (5).

In a 39th aspect according to any one of the preceding aspects, said gripping portion (21) of the handle (20) is interposed between said knob (10) and said battery housing (40), optionally with respect to a main direction of extension in length of the device.

In a 40th aspect according to any one of the preceding aspects, said work tool (2) comprises a cutting tool.

In a 41st aspect according to any one of the preceding aspects, said device is a hedge-trimming or turf -trimming device.

In a 42nd aspect according to any one of the preceding aspects, said work tool (2) is a hedge-trimming blade.

In a 43rd aspect according to the preceding aspect, said work tool (2) extends in length along a straight direction.

In a 44th aspect according to any one of the two preceding aspects, said hedge-trimming blade has a length comprised between 20 cm and 120 cm, optionally between 30 cm and 100 cm.

In a 45th aspect according to any one of the preceding aspects, said work tool (2) or said hedge-trimming blade extends in length parallel to a length extension of the handle (20).

In a 46th aspect according to any one of the preceding aspects, said motor (5) is interposed between said work tool (2) and said knob (10).

In a 47th aspect according to any one of the preceding aspects, said device is a hand-held device by the operator, optionally said hand-held device having a total weight comprised between 1 kg and 8 kg.

In a 48th aspect according to any one of the preceding aspects, said knob (10) is constrained to the central body (30) only by means of the undercut coupling system (34).

In a 49th aspect according to any one of the preceding aspects, the device extends in length between a first end (3), defined by an end portion of the work tool (2), and a second end (4) defined by an end portion of said battery housing (40).

In a 50th aspect according to any one of the preceding aspects, said battery housing (40) defines an end portion of the device opposite said work tool (2).

In a 51st aspect according to any one of the preceding aspects, said at least one knob (10, 20) is interposed between said work tool (2) and said battery housing (40).

In a 52nd aspect according to any one of the preceding aspects, said electric motor (5) comprises a motor axis (5) which is transverse, optionally orthogonal, to an extension in length of said work tool (2).

In a 53rd aspect according to any one of the preceding aspects, a distance between said battery housing (40) and said motor (5) is comprised between 60 cm and 90 cm, said distance optionally being a minimum distance between a motor axis of said motor (5) and said battery housing (40).

In a 54th aspect according to any one of the preceding aspects, a distance between said at least one knob (10, 20) and said motor (5) is comprised between 1 cm and 60 cm, optionally between 10 cm and 20 cm.

In a 55th aspect according to any one of the preceding aspects, said at least one knob (10, 20) comprises a first knob (10) configured to accommodate a first hand of the operator, and a second knob (20) configured to receive a second hand of the operator, each of said first knob (10) and said second knob (20) being interposed, according to said main extension direction of the device, between said motor (5) and said battery housing (40).
and in which said first knob (10) is interposed, according to said main extension direction of the device, between said motor (5) and said second knob (20),
and in which said second knob (20) is interposed, according to said main extension direction of the device, between said first knob (10) and said battery housing (40).

In a 56th aspect according to the preceding aspect, a maximum distance between said first knob (10) and said second knob (20) is comprised between 20 cm and 60 cm.

In a 57th aspect according to any one of the two preceding aspects, a maximum distance between said first knob (10) and said motor (5) is comprised between 1 cm and 30 cm, optionally between 10 cm and 20 cm.

In a 58th aspect according to any one of the preceding aspects from 55, the second knob (20) defines a handle extending substantially along a straight direction.

In a 59th aspect according to any one of the preceding aspects from 30, a straight direction of the handle (20) is substantially parallel to or coincident with the main direction (MD) of extension in length of the device.

In a 60th aspect according to any one of the preceding aspects from 55, the first knob (10) defines a medial lying plane (MP) transverse to said main extension direction (MD) in length of the device.
and wherein the medial plane (MP) of the first knob (10) is transverse to the straight direction of the handle (20).

In a 61st aspect according to any one of the preceding aspects from 55, the first knob (10) has a closed or semi-closed peripheral profile, optionally with a closed ring, to define an internal opening (14) of the knob (10) inside said peripheral profile.

In a 62nd aspect according to the preceding aspect, the first knob (10) extends along a plane transverse to said main extension direction (MD) in length of the device.

In a 63rd aspect according to any one of the preceding aspects from 61, the central body (30) passes through the internal opening (14) of the knob (10) or of the first knob (10).

In a 64th aspect according to any one of the preceding aspects, the device comprises said battery (41) housed in said battery housing (40), and in which the device defines a centre of gravity in a position interposed, according to said main direction (MD) of the device, between said electric motor (5) and said battery (41).

In a 65th aspect according to the preceding aspect, said centre of gravity has a maximum distance from the gripping portion (11) of said at least one handle (10, 20), optionally from the gripping portion (11) of the first handle (10), less than 20 cm, optionally less than 10 cm, optionally less than 5 cm.

In a 66th aspect according to any one of the preceding aspects from 64, said centre of gravity is positioned in an interposed zone, according to said main direction (MD) of the device, between said first knob (10) and said battery (41).

In a 67th aspect according to any one of the preceding aspects from 64, said centre of gravity is positioned in a zone interposed, according to said main direction (MD) of the device, between the gripping portion (11) of the first knob (10) and the gripping portion (21) of the second knob (20).

In a 68th aspect according to any one of the preceding aspects, said motor (5) is interposed between said work tool (2) and said at least one knob (10, 20).

In a 69th aspect according to any one of the preceding aspects, said motor (5) is interposed between said work tool (2) and said first knob (10).

In a 70th aspect according to any one of the preceding aspects, said at least one knob (10), optionally said first knob (10), is a non-adjustable fixed knob (10).

In a 71st aspect according to any one of the preceding aspects, the drive tab (52) and the gripping portion (21) of the handle (20) face each other so as to allow the operator to grasp said handle (20) and said drive tab (52) simultaneously with a same hand.

In a 72nd aspect according to any one of the preceding aspects, said gripping portion (21) of the handle (20) has a substantially cylindrical shape with a circular section having a respective radius.

In a 73rd aspect according to any one of the preceding aspects, said curved profile of the contact surface (53) of the drive tab (52) has, in transverse section to its extension in length, a "C" shape.

In a 73rd-bis aspect according to any one of the preceding aspects, said curved profile of the contact surface (53) of the drive tab (52) extends along said extension in width (W) of the drive tab (52).

In a 74th aspect according to any one of the preceding aspects, said curved profile of the contact surface (53) of the drive tab (52) is substantially semicircular or semi-elliptical in shape.

In a 75th aspect according to any one of the preceding aspects, the drive tab (52) is movable about said drive axis (AA) between a rest position and a drive position, in which:
- in the rest position the drive tab (52) is configured to prevent the activation of the motor (5) of the work tool (2), and in which in the rest position the drive tab (52) is separated and spaced apart by a rest distance from said gripping portion (21) of the handle (20), optionally in which said rest distance defines a free space between said drive tab (52) and said gripping portion (21) of the handle (20);
- in the drive position the drive tab (52) is configured to determine or allow the activation of the motor (5) of the work tool (2), and wherein in the drive position the drive tab (52) is in contact with said gripping portion (21) of the handle (20) or is separated and spaced apart by a drive distance, less than said rest distance, from the gripping portion (21) of the handle (20).

In a 76th aspect according to any one of the preceding aspects, the drive tab (52) comprises an abutment surface (55), opposite the contact surface (53), interposed between said contact surface (53) and the gripping portion (21) of the handle (20), in which said abutment surface (55) comprises a central zone (56) interposed between the first side edge (52a) and the second side edge (52b) of the drive tab (52),
and in which in the drive position:
- said central zone (56) of the abutment surface (55) of the drive tab (52) contacts the gripping portion (21) of the handle (20) or has a first distance with the gripping portion (21) of the handle (20); and
- the first side edge (52a) and the second side edge (52b) of the drive tab (52) are spaced apart from said gripping portion (21) of the handle (20) or have a second distance from said gripping portion (21) of the handle (20) greater than said first distance.

In a 77th aspect according to any one of the preceding aspects from 75, the drive tab (52), at least when in the drive position, at least partially wraps the handle (20) of the device.

In a 78th aspect according to any one of the preceding aspects, the gripping portion (21) of the handle (20) has a cylindrical shape with a circular section having a respective diameter, in which a ratio between a maximum width of the drive tab (52), measured between the first side edge (52a) and the second side edge (52b), and the diameter of the gripping portion (21) of the handle (20) is comprised between 0.9 and 1.4, optionally between 1 and 1.4, optionally between 1 and 1.2, optionally between 1 and 1.1.

In a 79th aspect according to any one of the preceding aspects, the gripping portion (21) of the handle (20) has a cylindrical shape with a circular section having a respective diameter, in which in the drive position, by joining a centre of said circular section of the handle with the first side edge (52a) and with the second side edge (52b) of the drive tab (52), an angular sector (α) is defined, including said drive tab (52), of angular extension comprised between 60° and 180°, optionally between 80° and 135°, optionally between 90° e 120°.

In an 80th aspect according to any one of the preceding aspects, a maximum width (W) of the drive tab (52), measured between the first side edge (52a) and the second side edge (52b), is comprised between 20 mm and 80 mm, optionally between 40 mm and 70 mm.

In an 81st aspect according to any one of the preceding aspects, a width of the handle (20), optionally a diameter of the handle (20), is comprised between 30 mm and 70 mm, optionally between 40 mm and 60 mm.

In an 82nd aspect according to any one of the preceding aspects, a width (W) of the drive tab (52) is variable along said length extension (L) of the drive tab (52).

In an 83rd aspect according to the preceding aspect, the width (W) of said drive tab (52) is maximum at said first side edge (52a) and/or at said second side edge (52b).

In an 84th aspect according to any one of the preceding aspects, said drive tab (52) extends in length up to a respective end portion (57) such that said first side edge (52a) and/or said second side edge (52b) are interposed between said fulcrum (51) and said end portion (57) of the drive tab (52) along said length extension.

In an 85th aspect according to the preceding aspect, said width of the drive tab (52) is minimum at the end portion (57) of the drive tab (52), increases at said first side edge (52a) and/or said second side edge (52b), and decreases in proximity to the fulcrum (51).

In an 86th aspect according to any one of the preceding aspects, the drive tab (52) is symmetrical with respect to a plane of symmetry thereof, said plane of symmetry being orthogonal to the drive axis (AA) and/or parallel to the extension in length (L) of the tab, in particular said plane of symmetry being parallel to the extension in length (L) of the drive tab (52) and orthogonal to the extension in width (W) of the drive tab (52).

In an 87th aspect according to any one of the preceding aspects, said drive tab (52) has a thickness (T), measured orthogonally to said extension in length (L) and width (W) of the drive tab (52), variable along said extension in length (L) of the drive tab (52).

In an 88th aspect according to any one of the preceding aspects, the thickness of said drive tab (52) is maximum at said first side edge (52a) and/or at said second side edge (52b).

In an 89th aspect according to the preceding aspect, said maximum thickness is measured between a central portion (58) of the contact surface (53), interposed between said first side edge (52a) and said second side edge (52b), and said first side edge (52a) and/or said second side edge (52b).

In a 90th aspect according to any one of the preceding aspects, said drive tab (52) extends in length to a respective end portion (57) such that said first side edge (52a) and/or said second side edge (52b) are interposed between said fulcrum (51) and said end portion (57) of the drive tab (52) along said length.
in which said thickness is minimum at said end portion (57) of the drive tab (52), increases at said first side edge (52a) and/or said second side edge (52b), and decreases in proximity to the fulcrum (51).

In a 91st aspect according to any one of the preceding aspects, the drive tab (52) has a maximum thickness, measured orthogonally to said extension in length (L) and in width (W), comprised between 3 mm and 20 mm, optionally between 3 mm and 15 mm, optionally and between 3 mm and 10 mm, and optionally between 3 mm and 6 mm.

In a 92nd aspect according to any one of the preceding aspects, the main component of the length extension (L) of the drive tab (52) is parallel to a length extension of the handle (20).

In a 93rd aspect according to any one of the preceding aspects, the curved profile of the contact surface (53) of the drive tab (52) is substantially semicircular in shape, and the handle (20) is substantially cylindrical in shape, the radius of curvature of the semicircular curved profile of the drive tab (52) being greater than the radius of the curved profile of the gripping portion (21) of the handle (20).

In a 94th aspect according to any one of the preceding aspects, the curved profile of the contact surface (53) of the drive tab (52) is substantially semicircular in shape, and the handle (20) is substantially cylindrical in shape, in which the cylindrical shape of the handle (20) has a centre which is displaced from a centre of the semicircular curved profile of the drive tab (52), optionally in which the cylindrical shape of the handle (20) is not concentric with the semicircular curved profile of the drive tab (52).

In a 95th aspect according to any one of the preceding aspects, said drive control (50) is made in a single piece.

In a 96th aspect according to any one of the preceding aspects, said drive control (50) is made of plastic or metallic material optionally by injection moulding.

In a 97th aspect according to any one of the preceding aspects, said contact surface (53) is comprised between 1 mm² and 10000 mm², optionally between 2000 mm² and 8000 mm², optionally between 3000 mm² and 8000 mm².

In a 98th aspect according to any one of the preceding aspects, a maximum length of the drive tab (52) along said length extension (L) is comprised between 30 mm and 120 mm, optionally between 40 mm and 80 mm.

In a 99th aspect according to any one of the preceding aspects, the device comprises a knob (10), distinct from said handle (20), comprising at least one respective gripping portion (11) configured to be grasped by an operator to manoeuvre the device during said maintenance operations, optionally in which said handle (20) is configured to be grasped by a first hand of the operator and said knob (10) being configured to be grasped by a second hand of the operator.

In a 100th aspect according to the preceding aspect, said knob (10) comprises a respective drive control (17) configured to activate or allow the activation of said motor (5) of the work tool (2), in which the device is configured for:
- activating the electric motor (5) if the drive control (17) of the knob (10) and the drive control (50) of the handle (20) are both driven by the operator;
- preventing the activation of the electric motor (5) if at least one among the drive control (17) of the knob (10) and the drive control (50) of the handle (20) is not activated by the operator.

In a 101st aspect according to any one of the two preceding aspects, said knob (10) extends along a transverse plane with respect to a length extension of the handle (20) of the device, said knob (10) being interposed between said handle (20) and said work tool (2) according to a main extension direction (MD) in length of the device.

In a 102nd aspect according to any one of the preceding aspects, said drive control (50) of the handle (20) comprises an activation portion (54) configured to contact with a switch of the device (1) to control the activation of said motor (5), in which the fulcrum (51) is interposed between the drive tab (52) and said activation portion (54), optionally in which said drive control (50) of the handle (20) defines a first type lever.

In a 103rd aspect according to any one of the preceding aspects, said motor (5) is an electric motor.

In a 104th aspect according to any one of the preceding aspects, said device comprises at least one electric battery (41) assigned to power said motor (5) of the work tool (2).

In a 105th aspect according to any one of the preceding aspects, in which the handle (20) extends in length orthogonally to the drive axis (AA) of the drive control (50).

In a 106th aspect according to any one of the preceding aspects from 49, in which a maximum distance between said first end (3) and said second end (4) of the device (1) is comprised between 120 cm and 160 cm.

### BRIEF DESCRIPTION OF THE DRAWINGS

Some embodiments and aspects of the invention will be described hereinafter with reference to the accompanying drawing tables, given merely for indicative/exemplary/explanatory non-limiting purposes, in which:
- Figure 1 and figure 2 are perspective views of a device according to the present invention;
- Figure 3 is a bottom view of a device according to the present invention;
- Figure 4 is a lateral view of a device according to the present invention;
- Figure 5 is a sectional view, according to the plane shown in figure 2, of a device according to the present invention;
- Figure 6 is a sectional view, according to the plane shown in figure 4, of a device according to the present invention;
- Figure 7 is a perspective view of a device according to the present invention in which a cap of the central body has been removed;
- Figure 8 is an exploded view of the central body and knob of the device of the present invention;
- Figure 9 is a perspective view of the knob of the device according to the present invention;
- Figure 10 is a sectional view, according to the plane shown in figure 9, of the handle of the device according to the present invention;
- Figure 11 is a perspective view of a shell of the knob of the device according to the present invention;
- Figure 12 is a perspective view of the drive tab of the device according to the present invention;
- Figure 13 is a lateral view of the drive tab of the device according to the present invention;
- Figure 14 is a front view of the drive tab of the device according to the present invention.

It should be noted that in the present detailed description, corresponding parts illustrated in the various figures are indicated with the same numerical references. The figures could illustrate the object of the invention through non--scale depictions so that the parts and components illustrated in the figures related to the object of the invention could exclusively relate to schematic depictions.

### DETAILED DESCRIPTION

### Device 1

The reference numeral 1 globally indicates a device for the maintenance of lands. The device 1 can be a cutting device for mowing the turfgrass of a land or for cutting hedges. The fact that the attached figures show only one hedge-trimmer device is not to be considered in a limiting manner: on the contrary, the device 1 of the present invention can be suitable for carrying out the function of brush cutter, or turf trimmer, or hedge trimmer or chainsaw. Alternatively, the device 1 can be a blower adapted to suck or blow leaves, grass and dust. Furthermore, the device 1 can be a lawnmower device according to air cushion technology. Devices configured to execute scans and/or inspections of land can also be considered devices for the maintenance of lands for the purposes of the present invention.

The present device 1 can be a portable device, in particular in which an operator, during land maintenance operations, carries the device by hand or with the aid of a shoulder strap. Therefore, during a working condition, the device 1 can be entirely supported in weight by the operator, without said device resting on the ground. The weight of the device of the present invention must therefore be congruent with a weight which can be carried by the operator as easily as possible. A In this regard, the device 1 of the present invention has a total weight, i.e., in an operating condition, comprised between 1 kg and 8 kg, preferably between 2 kg and 6 kg.

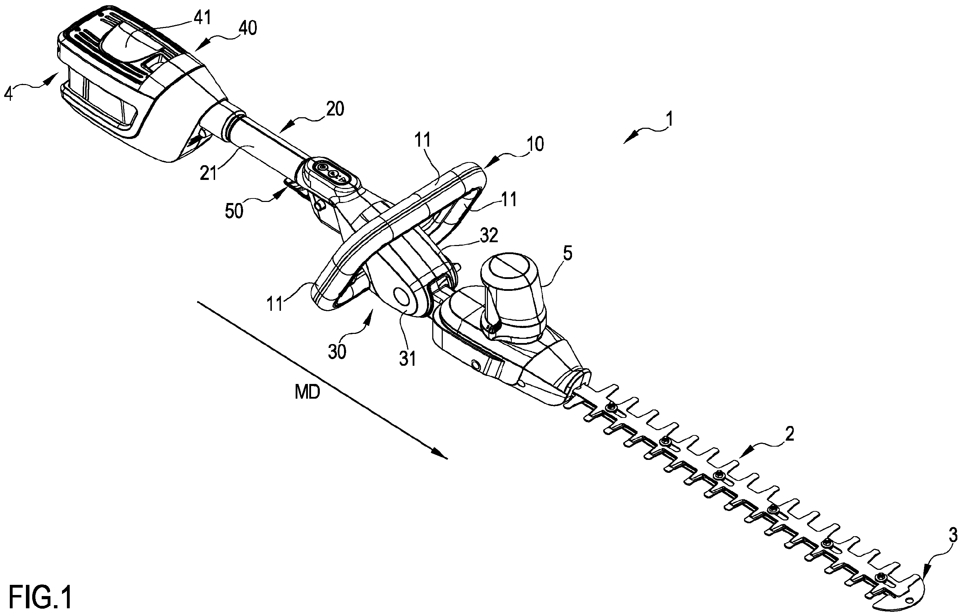

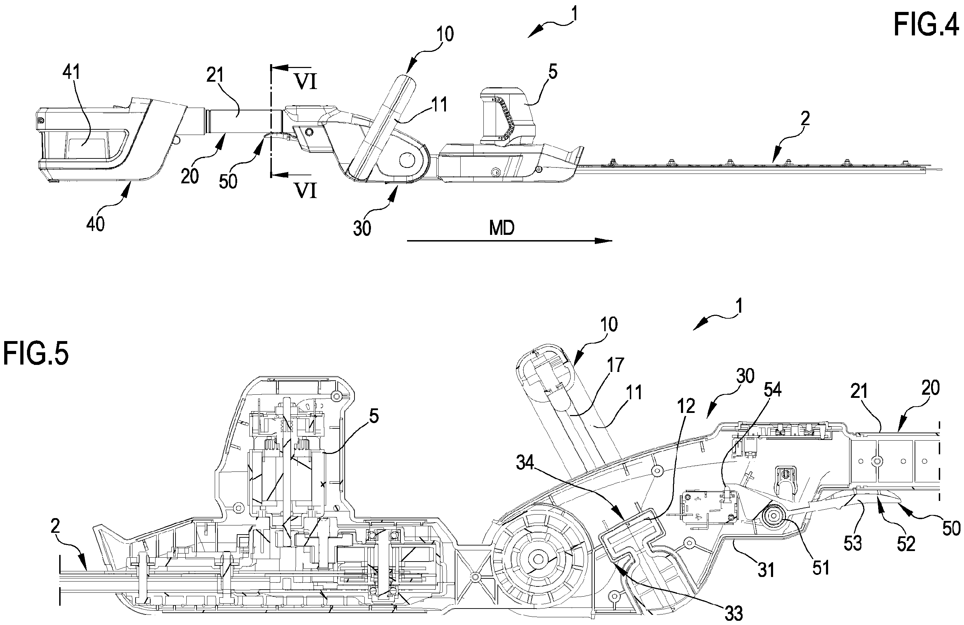

The device extends in length along a main direction MD, as shown in figures 1 and 4.

The device 1 comprises at least one work tool 2 configured to execute the maintenance operations. The work tool 2 can be a cutting tool adapted to allow the mowing of grass or the pruning of plants, for example shrubs or hedges. The attached figures show a work tool 2 comprising a hedge-trimming blade extending in length along a straight direction. Such a hedge-trimming blade can have a length comprised between 20 cm and 120 cm, optionally between 30 cm and 100 cm.

The hedge-trimming blade can extend in length along a direction substantially parallel to the main direction MD of the device 1.

The hedge-trimming blade is made of metallic material, for example steel, and laterally comprises a toothing for executing the cutting operations. The toothing comprises a plurality of recesses and protrusions positioned along the length extension of the blade: in particular said recesses and protrusions extend along a direction orthogonal to the length extension of the work tool 2.

The hedge-trimming blade can comprise a first blade and a second blade facing each other and movable with respect to each other to determine the cutting operations. In particular, the first and the second blade are in contact with each other and configured to slide one over the other to determine the cutting operations. The first and the second blade both extend in length to define the length extension of the cutting tool.

In the case of a hedge-trimming device, the device 1 can extend for a maximum length comprised between 30 cm and 150 cm, in particular between 40 cm and 130 cm.

In an embodiment in which the device 1 is a turf trimmer, the work tool 2 can comprise a rotating blade, optionally made of metal, or one or more rotating nylon wires for mowing the turfgrass.

The device 1 comprises at least one motor 5 operatively connected to the work tool 2 and configured to move the work tool 2 to execute the maintenance operations. The motor 5 is an electric motor, with or without brushes. The motor can be a DC or AC motor having a nominal power comprised between 50W and 3000W, optionally between 100W and 2000W. If the motor is powered by a battery, the motor has a nominal power comprised between 50W and 500W, optionally between 50W and 300W.

The motor 5 can have the motor axis in an orthogonal position with respect to the main direction MD of the device 1 and/or orthogonal with respect to the length extension of the work tool 2, for example with respect to the length extension of the hedge-trimming blade. The motor axis can also be orthogonal to the extension of the protrusions and recesses of the hedge-trimming blade.

The device 1 can comprise at least one battery housing 40 configured to accommodate a battery 41 for the power supply of the motor 5. The battery housing can comprise a coupling system configured to stably constrain the battery and allow an electrical connection between the battery and the motor 5. The battery housing 40 defines a housing volume adapted to accommodate the battery 41.

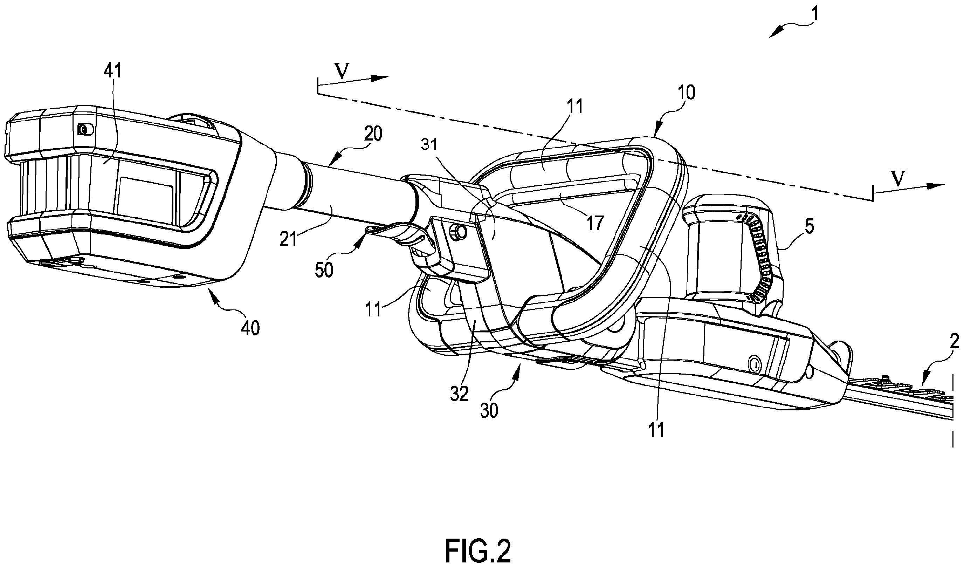

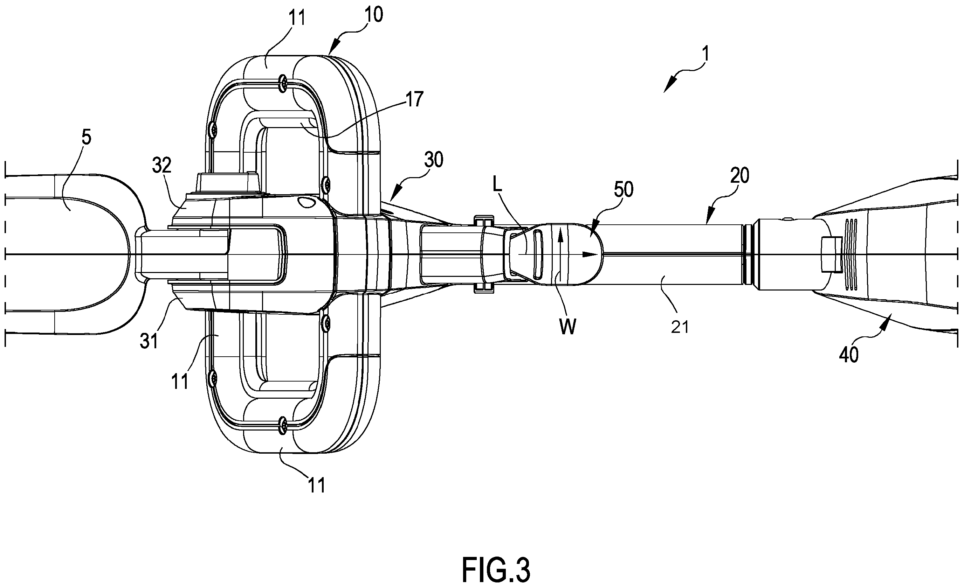

As shown in figures 1-4, the battery housing 40 can be positioned at an end portion of the device 1 opposite the work tool 2.

The battery 41 of the device 1 can have a voltage comprised between 10 Volts and 80 Volts, optionally between 15 Volts and 50 Volts, and a capacity comprised between 1 Ah and 15 Ah, optionally between 2Ah and 10Ah, optionally equal to 4Ah. The battery 41 can have a weight comprised between 0.5 kg and 5 kg.

The device further comprises at least one knob 10, 20 configured to be grasped by an operator to manoeuvre the device during the maintenance operations.

In particular, the device comprises a knob 10, also called first knob 10, comprises a peripheral profile 13 carrying at least one gripping portion 11 configured to be grasped by an operator during maintenance operations.

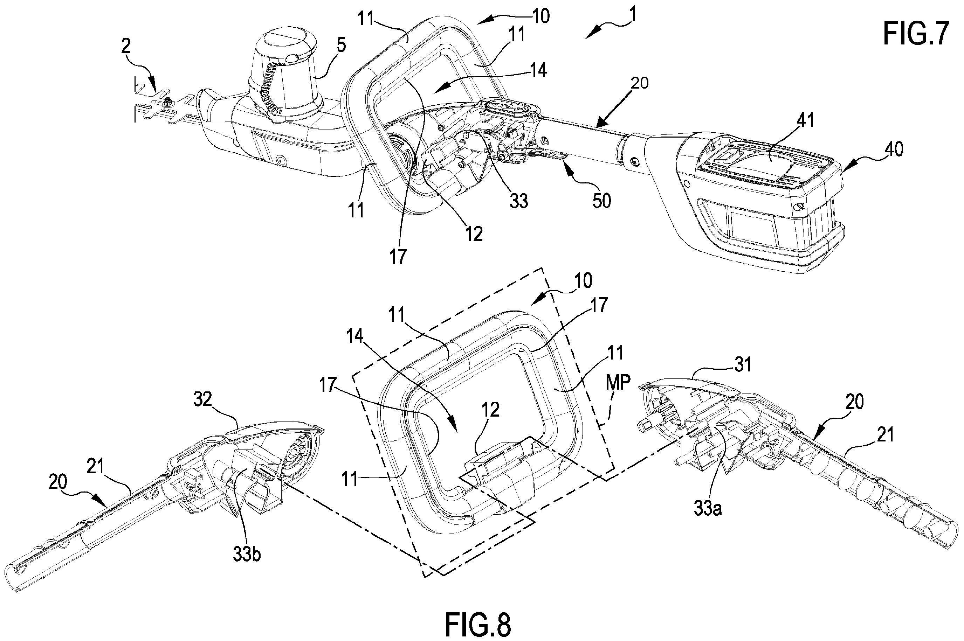

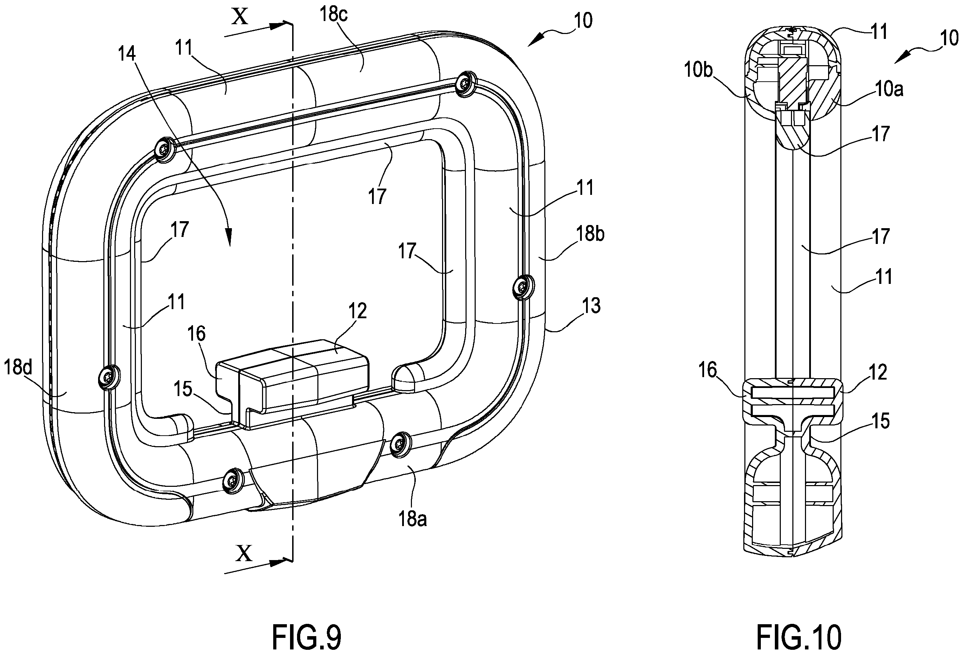

The knob 10 further comprises a constraining portion 12 for the connection to a central body 30 of the device 1. In particular, the constraining portion 12 is carried by the peripheral profile 13 of the knob 10, in which the constraining portion 12 of the knob 10 protrudes transversely with respect to the peripheral profile 13. The peripheral profile 13 can be closed, optionally in a closed or semi-closed ring, to define an internal opening 14 of the knob 10 inside the closed peripheral profile. The constraining portion 12 of the knob 10 can protrude towards the internal opening 14 of the knob 10, as shown in figures 8 and 9. In particular, the constraining portion 12 of the knob can be positioned in said internal opening 14 of the knob 10.

The constraining portion 12 is configured to define an undercut coupling system 34, so as to allow the knob 10 to be constrained to the central body 30 of the device 1 without the need to use threaded fixing elements, such as screws or bolts. In particular, the knob 10 is constrained to the central body 30 only by means of the undercut coupling system 34.

The constraining portion 12 of the knob 10 can have an "L" or "T" shape, optionally a section, shown in figures 5 and 10, of the constraining portion 12 of the knob 10 can have an "L" or "T" shape. In this regard, the constraining portion 12 of the knob 10 can comprise at least a first portion 15 and a second portion 16, in which the first portion 15 is interposed between the peripheral profile 13 of the knob 10 and the second portion 16, while the second portion 16 emerges from the first portion 15 transversely, optionally orthogonally, to the first portion 15. The combination of the first portion 15 with the second portion 16 defines said "T" or "L" shape of the constraining portion 12 of the knob 10. The peripheral profile 13 of the knob can have a substantially rectangular or square or trapezoidal shape, in which the vertices can be chamfered or rounded. In particular, the knob 10 can comprise a first stretch 18a, a second stretch 18b, a third stretch 18c and a fourth stretch 18d consecutive to each other. The first stretch 18a, the second stretch 18b, the third stretch 18c, and the fourth stretch 18d can each have a straight shape. The constraining portion 12 of the knob 10 protrudes transversely from the first stretch 18a of the peripheral profile 13.

The knob 10 can be made, partially or entirely, of plastic or composite material. In particular, the peripheral profile 13 of the knob 10 can be made of plastic or composite material. In greater detail, the constraining portion 12 and/or the gripping portion 11 of the knob 10 can be made of plastic or composite material.

The knob 10 defines a medial lying plane MP, shown in figure 8, transverse to the main extension direction MD in length of the device. The medial lying plane MP intersects the gripping portion 11 of the knob 10 and the constraining portion 12 of the knob 10 and optionally also the internal opening 14.

In an embodiment, the knob 10 is made starting from a first shell 10a and a second shell 10b which are distinct from each other and can be assembled together to form the knob 10. It should be noted that the first shell 10a and the second shell 10b each comprise a respective part of the gripping portion 11 and a respective part of the constraining portion 12 of the knob 10. The first shell 10a and the second shell 10b can be symmetrical to each other and optionally the same as each other. In particular, the first shell 10a and the second shell 10b of the knob 10 are made in a single piece, for example in plastic or composite material. The first shell 10a and the second shell 10b of the knob 10 can be made by injection moulding. The first shell 10a and the second shell 10b can be constrained to each other by means of an interlocking system and/or by means of screws.

The first and the second shell contact each other along a contact plane parallel or coinciding with the medial lying plane MP of the knob 10. The contact plane can be transverse to the main direction MD of the device 1. Said contact plane intersects the constraining portion 12 and the gripping portion 11 of the handle.

The knob 10 can comprise a drive control 17 configured to allow the activation of the work tool 2, in particular to allow the activation of the electric motor 5. The drive control 17 can be positioned inside the peripheral profile 13, in particular facing the internal opening 14 of the knob, so that the operator is capable of driving the drive control 17 of the knob 10 and, with the same hand, grasping the gripping portion 11 of the knob 10.

The drive control 17 can extend along different stretches of the knob 10: for example, the drive control 17 can extend along the second stretch 18b, the third stretch 18c and the fourth stretch 18d. The drive control 17 can thus have a shape which is counter-shaped to the knob 10, for example it can have a "C" shape, as shown in figures 7-9.

The device 1 can further comprise a second knob 20, hereinafter indicated as handle 20, extending substantially along the main direction MD of the device. The handle 20 comprises a respective gripping portion 21 configured to be grasped by a hand of the operator during the garden maintenance operations: in particular, the knob 10 is configured to be grasped by a first hand of the operator, while the handle 20 is configured to be grasped by a second hand of the operator.

The gripping portion 21 of the handle 20 is distinct and spatially separate from the gripping portion 11 of the knob 10, as shown in figures 1-4.

As shown in figures 1-4, the handle 20 can be interposed between the knob 10 and the battery housing 40 with respect to the main extension direction MD of the device 1. The knob 10 can be interposed between the work tool 2 and the handle 20 with respect to the main extension direction MD of the device 1: in particular the knob 10 can be interposed between the motor 5 and the handle 20 with respect to the main extension direction MD in length of the device 1. The handle 20 preferably extends along a substantially straight extension direction: the medial lying plane MP of the knob 10 is transverse to the extension direction of the handle 20. Optionally, the extension direction of the handle is substantially parallel to the extension in length of the work tool, in particular parallel to the extension in length of the hedge-trimming blade.

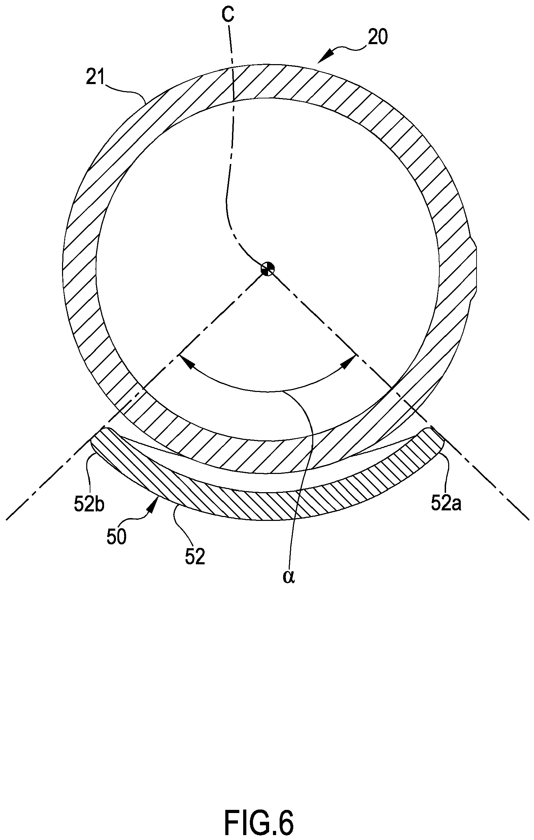

The gripping portion 21 of the handle 20 can have a substantially cylindrical shape with a circular section having a respective diameter, as shown in the sectional view of figure 6. The diameter of the circular section can be comprised between 3 cm and 7 cm, optionally between 4 cm and 6 cm.

The gripping portion 21 of the handle 20 can extend for a length, for example along the axis of said cylindrical shape, comprised between 10 cm and 40 cm, optionally between 15 cm and 30 cm.

The device can further comprise a drive control 50, alternatively or in combination with the drive control 17 of the knob 10. The drive control 50 is facing the gripping portion 21 of the handle 20 and configured to activate or allow the activation of said motor 5 of the work tool 2.

In particular, the device is configured to activate the electric motor 5 if the drive control 17 of the knob 10 and the drive control 50 of the handle 20 are both driven by the operator, and to prevent the activation of the electric motor 5 if at least one among the drive control 17 of the knob 10 and the drive control 50 of the handle 20 is not activated by the operator.

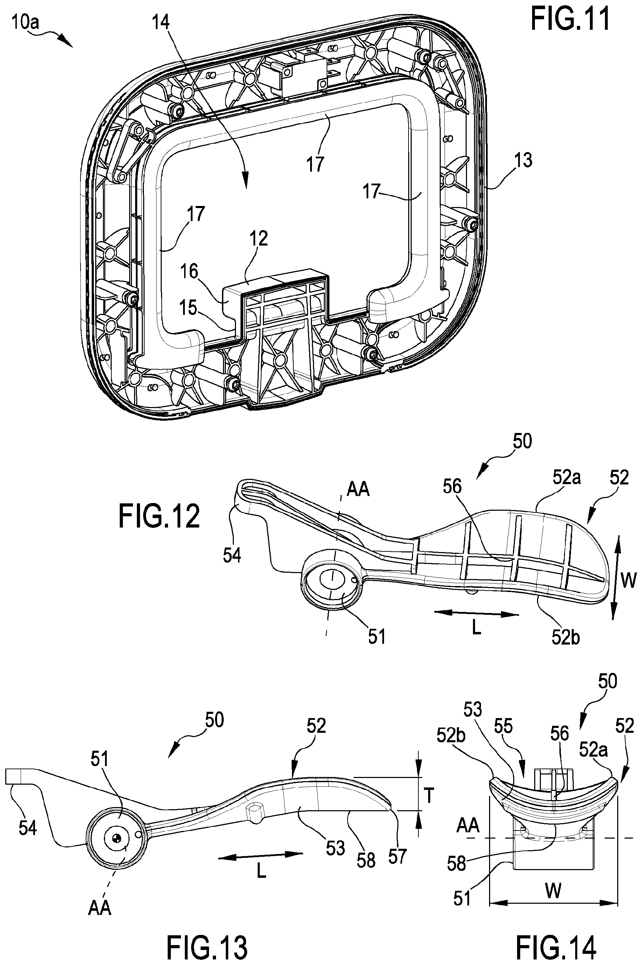

The drive control 50, shown in detail in figures 12-14 and in combination with the device 1 in figures 1-6, comprises a fulcrum 51 defining a drive axis AA and a drive tab 52 movable about said drive axis AA. The drive tab 52 is configured to be driven by an operator so as to determine the movement thereof about the drive axis AA, activating or allowing the activation of the motor 5 of the device 1.

The drive tab 52 extends in length L away from the drive axis AA, and in width W between a first side edge 52a and a second side edge 52b, as shown in figures 12-14.

The length extension L of the drive tab 52 is orthogonal to the drive axis AA. The width extension W of the drive tab 52 is parallel to the drive axis AA. It should be noted that the drive axis AA is fixed.

In particular, a main component of the length extension L of the drive tab 52 is parallel to the length extension of the handle 20, i.e., parallel to the axis of the cylindrical shape of the handle 20.

The drive tab 52 and the gripping portion 21 of the handle 20 face each other so as to allow the operator to grasp the handle 20 and the drive tab 52 simultaneously with a same hand.

The drive tab 52 comprises a contact surface 53, configured to contact a hand of the operator, extending in width W to define a respective curved profile having concavity facing towards the gripping portion 21 of the handle 20, as shown in the sectional view of figure 6.

The curved profile of the contact surface 53 of the drive tab 52 has, in a section transverse to its extension in length, a "C" shape. The curved profile of the contact surface 53 of the drive tab 52 can be substantially semicircular or semi-elliptical in shape.

The drive tab 52 is movable about the drive axis AA between a rest position and a drive position: the drive tab 52 is therefore movable towards and away from the gripping portion 21 of the handle in the passage between the rest position and the drive position and vice versa.

In the rest position the drive tab 52 is configured to prevent the activation of the motor 5 of the work tool 2. In the rest position the drive tab 52 is separated and spatially spaced by a rest distance from the gripping portion 21 of the handle 20. In other words, the rest distance defines a free space between the drive tab 52 and the gripping portion 21 of the handle 20.

In the drive position, shown in the sectional view of figure 6, the drive tab 52 is configured to determine or to allow the activation of the motor 5 of the work tool 2. In the drive position the drive tab 52 can be in contact with the gripping portion 21 of the handle 20: alternatively, the drive tab 52 in the drive position can be separated and spaced by a drive distance, smaller than said rest distance, from the gripping portion 21 of the handle 20.

The drive tab 52 further comprises an abutment surface 55 interposed between the contact surface 53 and the gripping portion 21 of the handle 20. The drive tab 52 extends in thickness T between the contact surface 53 and the abutment surface 55.

The abutment surface 55 comprises a central zone 56 interposed between the first side edge 52a and the second side edge 52b of the drive tab 52 according to the width extension W. In the drive position, the central zone 56 of the abutment surface 55 of the drive tab 52 contacts the gripping portion 21 of the handle 20. Alternatively, in the drive position, the central zone 56 of the abutment surface 55 of the drive tab 52 has a first distance with the gripping portion 21 of the handle 20.

In the drive position, the first side edge 52a and the second side edge 52b of the drive tab 52 are spaced from the gripping portion 21 of the handle 20. Alternatively, the first side edge 52a and the second side edge 52b of the drive tab 52 have a second distance from the gripping portion 21 of the handle 20 greater than said first distance, as shown in the sectional view of figure 6.

In this regard, in an embodiment in which the curved profile of the contact surface 53 of the drive tab 52 is substantially semicircular in shape, and in which the handle 20 has a substantially cylindrical shape, the radius of curvature of the semicircular curved profile of the drive tab 52 can be greater than the radius of the gripping portion 21 of the handle 20. This allows to obtain the side edges 52a, 52b spaced, in the drive position, from the gripping portion 21 of the handle 20.

Similarly, to obtain the spaced side edges 52a, 52b, in the drive position, from the gripping portion 21 of the handle 20, the cylindrical shape of the handle 20 can have a displaced centre with respect to a centre of the semicircular curved profile of the drive tab 52: in other words, the cylindrical shape of the handle 20 may not be concentric with the semicircular curved profile of the drive tab 52.

The interposed distance, in the drive position, between the side edges 52a, 52b and the gripping portion 21 of the handle 20 prevents the risk of the operator pinching his/her hand between the drive tab and the handle during the driving of the drive tab itself.

The drive tab 52, at least when arranged in the drive position, at least partially wraps the handle 20 of the device. In fact, as shown in the section of figure 6, in the drive position, by joining a centre of the circular section of the handle 20 with the first side edge 52a and with the second side edge 52b of the drive tab 52, an angular sector α is defined, including the drive tab 52, having angular extension comprised between 60° and 180°, optionally between 80° and 135°, optionally between 90° and 120°.

It should also be noted that, in an embodiment in which the gripping portion 21 of the handle 20 has a cylindrical shape with a circular section having a respective diameter, a ratio between a maximum width of the drive tab 52, measured between the first side edge 52a and the second side edge 52b, and the diameter of the gripping portion 21 of the handle 20 is comprised between 0.9 and 1.4, optionally between 1 and 1.4, optionally between 1 and 1.2, optionally between 1 and 1.1.

The drive control 50 of the handle 20 further comprises an activation portion 54 configured to contact with a switch of the device 1 to control the activation of the motor 5. In the embodiment shown in figures 12-14, the fulcrum 51 is interposed between the drive tab 52 and the activation portion 54, to define a first type lever.

The drive tab 52 can be symmetrical with respect to a plane of symmetry thereof: the plane of symmetry of the tab 52 can be orthogonal to the drive axis AA and/or parallel to the length extension L of the drive tab 52. In particular the plane of symmetry is parallel to the length extension L of the drive tab 52 and orthogonal to the width extension W of the drive tab 52. The plane of symmetry crosses the central zone 56 of the abutment surface 55 and/or a central portion 58 of the contact surface 53.

The drive tab 52 extends in length L up to a respective end portion 57 such that the first side edge 52a and/or the second side edge 52b are interposed between the fulcrum 51 and the end portion 57 of the drive tab 52 according to the extension in length L of the drive tab 52.

As shown in figures 12-14, the width W of the drive tab 52 can be variable along the length extension L of the drive tab 52. In a specific embodiment, the width of the drive tab 52 is minimum at the end portion 57 of the drive tab 52, increases at the first side edge 52a and/or the second side edge 52b, and decreases in proximity to the fulcrum 51. The drive tab 52 also has a thickness T, measured orthogonally to the extension in length L and width W of the drive tab 52. The thickness is measured between a central portion 58 of the contact surface 53, interposed between the first side edge 52a and the second side edge 52b, and the first side edge 52a and/or the second side edge 52b.

The thickness of the drive tab 52 can be variable along the length extension L of the drive tab 52.

The thickness T can be minimum at the end portion 57 of the drive tab 52, increase at the first side edge 52a and/or the second side edge 52b, and decrease in proximity to the fulcrum 51.

The thickness T of the drive tab 52 can be maximum at the first side edge 52a and/or at the second side edge 52b. The drive control 50 can be made in a single piece, for example of plastic or metallic material, by injection moulding.

The preferred dimensions of the drive tab 52 are listed below:
- a maximum length, measured between the drive axis AA and the end portion 57, can be comprised between 30 mm and 120 mm, optionally between 40 mm and 100 mm;
- a maximum width W, measured between the first side edge 52a and the second side edge 52b, can be comprised between 20 mm and 80 mm, optionally between 40 mm and 70 mm;
- the maximum thickness can be comprised between 3 mm and 20 mm, optionally between 3 mm and 15 mm, optionally between 3 mm and 10 mm, and optionally between 3 mm and 6 mm;
- the contact surface 53 can be comprised between 1 mm² and 10000 mm², 2000 mm² and 8000 mm².

As previously anticipated, the device comprises a central body 30 carrying the knob 10. The central body can be interposed between the work tool 2 and the battery housing 40, and in particular between the motor axis of the motor 5 and the gripping portion 21 of the handle 20. In detail, the central body is connected on one side to one end of the handle 20, and on one side to an end of the work tool 2 or of an assembly including the motor 5.

The central body 30 comprises a respective constraining portion 33 constrained or configured to be constrained to the constraining portion 12 of the knob 10. The knob 10 is then directly carried by the central body 30, such that the central body 30 is physically interposed between the knob 10 and the rest of the components of the device 1.

The constraining portion 33 of the central body 30 is at least partly counter-shaped to the constraining portion 12 of the knob 10 to define an undercut coupling system 34 constraining the knob 10 to the central body 30, as shown in the sectional view of figure 5. The undercut coupling system 34 allows to constrain the knob 10 to the central body 30 without the aid of threaded fixing elements, such as screws, nuts and bolts. In other words, the coupling between the knob 10 and the central body 30 can consist of said undercut coupling system 34.

The constraining portion 33 of the central body 30 can have an "L" or "T" shape so as to define, in combination with the constraining portion 12 of the knob 10, the undercut coupling system 34. In detail, a section of the constraining portion 33 of the central body 30 can have an "L" or "T" shape.

In the assembled condition, the constraining portion 33 of the central body 30 wraps and locks, in particular in each direction, the constraining portion 12 of the knob 10.

In the assembled condition, the constraining portion 12 of the knob 10 is then fixed in position to the constraining portion 33 of the central body 30, in which the constraining portion 12 of the knob 10 is inserted in the constraining portion 33 of the central body 30.

As shown in the exploded view of figure 8, the central body 30 can comprise at least a first cap 31 and a second cap 32 facing and constrained to each other in an assembled condition of the central body 30. The first cap 31 and the second cap 32 are therefore distinct components and constrained to each other during an assembly step of the device 1 to define the assembled condition.

In the assembled condition, the first cap 31 and the second cap 32 define in combination the constraining portion 33 of the central body 30. In particular, the first cap 31 and the second cap 32 each comprise a respective part 33a, 33b of the constraining portion 33 of the central body 30. For example. the part 33a of the constraining portion 33 of the first cap 31 and the part 33b of the constraining portion 33 of the second cap 32 can each have an "L" or "T" shape, as shown in the exploded view of figure 8.

The part 33a of the constraining portion 33 of the first cap 31 can be symmetrical, according to a respective plane of symmetry, to the part 33b of the constraining portion 33 of the second cap 32: said plane of symmetry can be a plane of contact between the first cap 31 and the second cap 32. Optionally, the part 33a of the constraining portion 33 of the first cap 31 can be symmetrical or substantially equal to the part 33b of the constraining portion 33 of the second cap 32.

The constraining portion 33 of the central body 30 is defined only in the assembled condition of the central body 30: in particular the undercut coupling system 34 constraining said knob 10 to the central body 30 is defined only in the assembled condition of the central body 30. In other words, the constraint between the knob 10 and the central body 30 is established only when the first cap 31 and the second cap 32 are joined together.

In contrast, in a disassembled condition in which the first cap 31 is separated from the second cap 32, the constraining portion 33 of the central body 30 is not defined and therefore the knob 10 is separable from the central body 30.

In the assembled condition, the knob 10 can be irremovable from the central body 30: in fact, the knob 10 is separable from the central body 30 only in the disassembled condition of the central body 30.

It should be noted that the first cap 31 and the second cap 32 of the central body 30 are constrainable and releasable from each other, to define the assembled condition and the disassembled condition of the central body 30, respectively. The first cap 31 and the second cap 32 of the central body 30 can be constrained to each other by means of an interlocking system and/or threaded elements, for example one or more screws.

In the assembled condition, the first cap 31 and the second cap 32 face each other and optionally contact each other along a constraining plane substantially parallel to the main direction MD of the device. Such a constraining plane can intersect both the gripping portion 11 of the knob, and the constraining portion 12 of the knob. In greater detail, the constraining plane can pass through the constraining portion 33 of the central body 30. In greater detail, the constraining plane can be parallel to a protrusion direction, starting from the peripheral profile 13, of the first portion 15 of the constraining portion 12 of the knob 10. Such a constraining plane can be parallel to the motor axis of the motor 5.

As shown in the attached figures, the central body 30 passes through the internal opening 14 of the knob 10: the constraining portion 33 of the central body 30 is also inside the internal opening 14 of the handle 14. In particular, the medial lying plane MP of the knob 10 intersects both the constraining portion 12 of the handle, and the constraining portion 33 of the central body 30. In fact, the medial lying plane MP of the knob 10 intersects the undercut coupling system 34.

### Device balancing

The device 1 can be a portable device, in particular in which an operator, during land maintenance operations, carries the device by hand or with the aid of a shoulder strap. Therefore, during a working condition, the device 1 can be entirely supported in weight by the operator, without said device 1 resting on the ground. The weight of the device of the present invention must therefore be congruent with a weight which can be carried by the operator as easily as possible.

Similarly, the weight of the device must be balanced so as to reduce the effort required of the operator during maintenance operations.

In this regard, the components of the device, such as the motor 5, the battery housing 40 and the battery 41, and the work tool 2, are arranged as follows according to the main extension direction MD in length.

In an embodiment, the knob 10, 20, i.e., the knob 10 and/or the handle 20, is interposed between the work tool 2 and the battery housing 40. In greater detail, both the knob 10 and the handle 20 are interposed between the motor 5 and the battery housing 40. In particular, the knob 10 is interposed between the motor 5 and the handle 20. The handle 20 is instead interposed between the knob 10 and the battery housing 40.

A maximum distance between the knob 10 and the handle 20 can be comprised between 20 cm and 60 cm: in particular such a distance is measured between the gripping portion 11 of the knob 10 and the gripping portion 21 of the handle 20.

The motor 5 can be interposed between the tool 2 and the knob 10. A distance between the knob 10 and the motor 5 can be comprised between 1 cm and 40 cm, optionally between 10 cm and 30 cm.

The battery housing 40 can further define an end portion of the device 1 opposite the work tool 2. In other words, the device extends in length between a first end 3, defined by an end portion of the work tool 2, and a second end 4 defined by an end portion of the battery housing 40.

A distance between the battery housing 40 and the motor 5 can be comprised between 60 cm and 90 cm: such a distance is a minimum distance measured between a motor axis of said motor 5 and the battery housing 40.

In a condition in which the device comprises the battery 41 housed in the battery housing 40 thereof, the device 1 defines a centre of gravity in an interposed position, according to the main direction MD of the device, between the motor 5 and the battery 41. In particular, the centre of gravity is positioned between the motor axis of the motor 5 and the battery 41.

The centre of gravity preferably has a maximum distance from the gripping portion 11 of the knob 10 less than 20 cm, optionally less than 10 cm, optionally less than 5 cm. Said maximum distance is measured along the main direction MD of the device.

In greater detail, the centre of gravity can be positioned in a zone interposed, according to the main direction MD of the device, between the knob 10 and the battery 41.

Alternatively, the centre of gravity can be positioned in a zone interposed, according to the main direction MD of the device, between the gripping portion 11 of the knob 10 and the gripping portion 21 of the handle 20.

### Manufacturing process of the device 1

The present invention further relates to a manufacturing process of a device 1 adapted to execute maintenance operations in a land or garden. The device 1 can be in accordance with the preceding disclosure.

The manufacturing process comprises at least the following steps:
- arranging at least one work tool 2 configured to execute maintenance operations;
- arranging at least one motor 5 operatively connected to the work tool 2 and configured to move said work tool 2 to execute said maintenance operations;
- arranging a knob 10 comprising at least one gripping portion 11 configured to be grasped by an operator during said maintenance operations, and at least one constraining portion 12.

The manufacturing process further comprises a step of arranging at least a first cap 31 and a second cap 32 of a central body 30 of the device 1; each among the first cap 31 and the second cap 32 comprising a respective part 33a, 33b of a constraining portion 33 of the central body 30.

In a disassembled condition in which the first cap 31 and the second cap 32 are separated from each other, the process comprises a step of interposing the constraining portion 12 of the knob 10 between the first cap 31 and the second cap 32.

The process then comprises a step of approaching and constraining the first cap 31 to the second cap 32 maintaining the constraining portion 12 of the knob 10 interposed between the respective parts 33a, 33b of the constraining portion 33 of the first cap 31 and of the second cap 32.

It should be noted that the step of approaching and constraining the first cap 31 to the second cap 32 defines an assembled condition of the central body 30. The constraining portion 33 of the central body 30 is at least partially counter-shaped to the constraining portion 12 of said knob 10 to define, in the assembled condition of the central body 30, an undercut coupling system 34 between the constraining portion 12 of the knob 10 and the constraining portion 33 of the central body 30.

## Claims

1. Device (1) adapted to execute maintenance operations on a land or garden, said device (1) being optionally suitable for use as a brush cutter or as a turf trimmer or as a hedge trimmer or as a chainsaw or as a blower, said device (1) comprising:
- at least one work tool (2) configured to execute said maintenance operations;
- at least one motor (5) operatively connected to said work tool (2) and configured to move said work tool (2) to execute said maintenance operations;
- a handle (20) comprising a gripping portion configured to be grasped by an operator to manoeuvre said device during the garden maintenance operations,
- at least one drive control (50) configured to activate or allow the activation of said motor (5) of the work tool (2),
said drive control (50) comprising a fulcrum (51) defining a drive axis (AA) and a drive tab (52) movable about said drive axis (AA) and configured to be driven by an operator,
in which said drive tab (52) extends:
• in length (L) away from the drive axis (AA), and
• in width (W), orthogonal to said extension in length (L), between a first side edge (52a) and a second side edge (52b),
and wherein said drive tab (52) comprises a contact surface (53), configured to contact a hand of the operator, extending in width (W) to define a respective curved profile having concavity facing towards said gripping portion (21) of the handle (20).

2. Device (1) according to the preceding claim, wherein the drive tab (52) and the gripping portion (21) of the handle (20) face each other so as to allow the operator to grasp said handle (20) and said drive tab (52) simultaneously with a same hand.

3. Device (1) according to any one of the preceding claims, wherein said gripping portion (21) of the handle (20) has a substantially cylindrical shape with a circular section having a respective radius,
and wherein said curved profile of the contact surface (53) of the drive tab (52) has, in a section transverse to its extension in length, a "C" shape and/or a substantially semicircular or semi-elliptical shape.

4. Device (1) according to any one of the preceding claims, wherein the drive tab (52) is movable about said drive axis (AA) between a rest position and a drive position, in which:
- in the rest position the drive tab (52) is configured to prevent the activation of the motor (5) of the work tool (2), and in which in the rest position the drive tab (52) is separated and spaced apart by a rest distance from said gripping portion (21) of the handle (20), and wherein said rest distance defines a free space between said drive tab (52) and said gripping portion (21) of the handle (20);
- in the drive position the drive tab (52) is configured to determine or allow the activation of the motor (5) of the work tool (2), and wherein in the drive position the drive tab (52) is in contact with said gripping portion (21) of the handle (20) or is separated and spaced apart by a drive distance, less than said rest distance, from the gripping portion (21) of the handle (20).

5. Device (1) according to the preceding claim, wherein the drive tab (52) comprises an abutment surface (55), opposite the contact surface (53), interposed between said contact surface (53) and the gripping portion (21) of the handle (20),
wherein said abutment surface (55) comprises a central zone (56) interposed between the first side edge (52a) and the second side edge (52b) of the drive tab (52),
and in which in the drive position:
- said central zone (56) of the abutment surface (55) of the drive tab (52) contacts the gripping portion (21) of the handle (20) or has a first distance with the gripping portion (21) of the handle (20); and
- the first side edge (52a) and the second side edge (52b) of the drive tab (52) are spaced apart from said gripping portion (21) of the handle (20) or have a second distance from said gripping portion (21) of the handle (20) greater than said first distance.

6. Device (1) according to any one of the preceding claims 4 and 5, wherein the gripping portion (21) of the handle (20) has a cylindrical shape with a circular section having a respective diameter,
the drive tab (52), at least when in the drive position, at least partially wrapping the handle (20) of the device,
wherein in the drive position, by joining a centre of said circular section of the handle with the first side edge (52a) and with the second side edge (52b) of the drive tab (52), an angular sector (a) is defined, including said drive tab (52), of angular extension comprised between 60° and 180° or between 80° and 135°.

7. Device (1) according to any one of the preceding claims, wherein the gripping portion (21) of the handle (20) has a cylindrical shape with a circular section having a respective diameter,
wherein a ratio between a maximum width (W) of the drive tab (52), measured between the first side edge (52a) and the second side edge (52b), and the diameter of the gripping portion (21) of the handle (20) is comprised between 0.9 and 1.4 or between 1 and 1.4.

8. Device (1) according to any one of the preceding claims, wherein a maximum width (W) of the drive tab (52), measured between the first side edge (52a) and the second side edge (52b), is comprised between 20 mm and 70 mm,
and wherein a width of the handle (20) or a diameter of the handle (20) is comprised between 30 mm and 70 mm.

9. Device (1) according to any one of the preceding claims, wherein the drive tab (52) is symmetrical with respect to a plane of symmetry thereof, said plane of symmetry being orthogonal to the drive axis (AA) and/or parallel to the extension in length (L) of the drive tab (529,
in particular said plane of symmetry being parallel to the length extension (L) of the drive tab (52) and orthogonal to the width extension (W) of the drive tab (52).

10. Device (1) according to any one of the preceding claims, wherein a width (W) of the drive tab (52) is variable along said length extension (L) of the drive tab (52),
and wherein the width (W) of said drive tab (52) is maximum at said first side edge (52a) and/or at said second side edge (52b),
and wherein said drive tab (52) extends in length to a respective end portion (57) such that said first side edge (52a) and/or said second side edge (52b) are interposed between said fulcrum (51) and said end portion (57) of the drive tab (52) along said length extension,
wherein said width of the drive tab (52) is minimum at the end portion (57) of the drive tab (52), increases at said first side edge (52a) and/or said second side edge (52b), and decreases in proximity to the fulcrum (51).

11. Device (1) according to any one of the preceding claims, wherein said drive tab (52) has a thickness (T), measured orthogonally to said extension in length (L) and width (W) of the drive tab (52), variable along said extension in length (L) of the drive tab (52),
and wherein the thickness of said drive tab (52) is maximum at said first side edge (52a) and/or at said second side edge (52b),
said maximum thickness being measured between a central portion (58) of the contact surface (53), interposed between said first side edge (52a) and said second side edge (52b), and said first side edge (52a) and/or said second side edge (52b),
and wherein said drive tab (52) extends in length to a respective end portion (57) such that said first side edge (52a) and/or said second side edge (52b) are interposed between said fulcrum (51) and said end portion (57) of the drive tab (52) along said length extension,
in which said thickness is minimum at said end portion (57) of the drive tab (52), increases at said first side edge (52a) and/or said second side edge (52b), and decreases in proximity to the fulcrum (51).

12. Device (1) according to any one of the preceding claims, wherein the curved profile of the contact surface (53) of the drive tab (52) has a substantially semicircular shape, and the handle (20) has a substantially cylindrical shape, the radius of curvature of the semicircular curved profile of the drive tab (52) being greater than the radius of the curved profile of the gripping portion (21) of the handle (20).

13. Device (1) according to any one of the preceding claims, wherein said drive control (50) is made in a single piece, said drive control (50) being made of plastic or metal material by injection moulding,
and wherein said contact surface (53) is comprised between 2000 mm² and 8000 mm².

14. Device (1) according to any one of the preceding claims, wherein the handle (20) extends in length orthogonally to the drive axis (AA) of the drive control (50).

15. Device (1) according to any one of the preceding claims, wherein the device comprises a knob (10), distinct from said handle (20), comprising at least one respective gripping portion (11) configured to be grasped by an operator to manoeuvre the device during said maintenance operations, and wherein said handle (20) is configured to be grasped by a first hand of the operator and said knob (10) being configured to be grasped by a second hand of the operator,
wherein said knob (10) comprises a respective drive control (17) configured to activate or allow the activation of said motor (5) of the work tool (2),
wherein the device is configured for:
- activating the electric motor (5) if the drive control (17) of the knob (10) and the drive control (50) of the handle (20) are both driven by the operator;
preventing the activation of the electric motor (5) if at least one among the drive control (17) of the knob (10) and the drive control (50) of the handle (20) is not activated by the operator.
